# FASCICULE DE BREVET EUROPEEN

(11) **EP 3 306 164 B1**
(45) Date de publication et mention de la délivrance du brevet: **02.12.2020**
(21) Numéro de dépôt: 17194545.4
(22) Date de dépôt: 03.10.2017
(51) Int. Cl.: F16L 23/08, F16L 23/20

(54) **SYSTEME DE SERRAGE A POSITION ANGULAIRE CONTROLEE POUR LE RACCORDEMENT DE DEUX TUBES**
SPANNSYSTEM IN KONTROLLIERTER WINKELPOSITION FÜR ANSCHLUSS VON ZWEI ROHREN
TIGHTENING SYSTEM WITH CONTROLLED ANGULAR POSITION FOR CONNECTING TWO TUBES

(30) Priorité: 04.10.2016 FR 1659571
(43) Date de publication de la demande: 11.04.2018
(73) Titulaire: Etablissements Caillau, 92130 Issy-les-Moulineaux (FR)
(72) Inventeur: Rigollet, Nicolas, 41200 Romorantin (FR)
(74) Mandataire: Cabinet Beau de Loménie

(56) Documents cités:
- EP-A1- 1 451 498
- EP-A1- 2 474 721
- EP-A1- 2 598 785
- US-A- 3 822 075
- US-B2- 7 520 539

## Description

La présente invention concerne un système pour le raccordement d'un premier tube et d'un deuxième tube, le système comprenant un collier de serrage apte à être serré autour des extrémités aboutées des deux tubes, et une rondelle solidarisée avec le collier de serrage par des moyens de solidarisation.

Un système de serrage de ce type est connu par le brevet européen EP 1451498. Dans ce brevet, les extrémités des tubes en regard présentent des surfaces d'appui faisant saillie par rapport à la surface extérieure cylindrique desdits tubes. Le collier de serrage comprend une bande de serrage dont la section est par exemple sensiblement en forme de V ou de U, de façon que les ailes formées par cette section prennent respectivement appui sur la surface d'appui du premier tube et sur celle du deuxième tube. Ainsi, le serrage du collier tend à maintenir les tubes serrés l'un contre l'autre. La section en forme de V est intéressante dans la mesure où, lors du serrage du collier, elle rapproche les tubes l'un de l'autre.

Les moyens de serrage de la bande comprennent par exemple un système à vis. Ainsi, les extrémités de la bande peuvent être redressées de manière à former des pattes d'appui munies de perçage dans lesquelles peut être insérée une vis. Un écrou est disposé derrière l'une de ces pattes de telle sorte que la rotation de la vis entraîne le serrage du collier. Toutefois, d'autres moyens de serrage peuvent être prévus, par exemple du type fonctionnant par accrochage, en particulier du type comprenant un crochet redressé par rapport à la bande et une oreille également redressée par rapport à la bande, le crochet s'accrochant derrière l'oreille pour maintenir le collier à l'état serré.

La rondelle du système de serrage peut en particulier servir à assurer une étanchéité du raccordement entre les deux tubes, en présentant à cet effet une portion d'étanchéité qui, lorsque le système est serré sur les tubes, est prise entre deux surfaces d'étanchéité, appartenant respectivement au premier et au deuxième tube.

Dans certaines applications, l'on souhaite par ailleurs garantir que le système de serrage se trouve dans une certaine position angulaire par rapport au premier tube, typiquement pour contrôler la position des pattes d'appui et de la vis et optimiser l'encombrement du système, ou encore pour faciliter l'accès des opérateurs au système de serrage lors du montage ou du démontage de ce dernier.

La demande internationale WO 2016/034820 divulgue un autre système de serrage pour le raccordement de deux tubes, le système comprenant un collier de serrage ayant une patte de retenue. La patte de retenue présente une portion de fixation sur la bande de serrage du collier et une portion d'attache par laquelle ladite patte de retenue est apte à être attachée au premier tube. Une telle patte de retenue apporte satisfaction pour maintenir la position angulaire du collier de serrage par rapport au premier tube. Cependant, elle crée un encombrement supplémentaire à l'extérieur du premier tube et nécessite d'être attachée au premier tube lors d'une étape supplémentaire, par exemple une étape de soudure, ce qui rallonge le processus d'assemblage des tubes.

Le document US 7,520,539 divulgue un autre type de système de serrage se mettant intégralement à l'extérieur des tubes à joindre.

Il existe donc un besoin pour un nouveau type de système de raccordement et de serrage pour remédier aux inconvénients précités et, en particulier, pour contrôler la position angulaire du système de serrage par rapport au premier tube de manière simple, rapide et peu encombrante.

Ce but est atteint grâce à un système selon la revendication 1.

Ainsi, la coopération de l'élément de blocage et de l'organe de positionnement assure que le système de serrage et le premier tube sont disposés angulairement, l'un par rapport à l'autre, de la façon souhaitée. Selon l'invention, cette position angulaire peut être prédéterminée par le choix de l'emplacement de l'élément de blocage sur la rondelle et de l'organe de positionnement sur le premier tube, respectivement. En outre, la coopération de l'élément de blocage et de l'organe de positionnement permet d'éviter le recours à une troisième pièce telle qu'une patte de retenue, ce qui limite la complexité du système de serrage. Par ailleurs, dans la mesure où la position angulaire est contrôlée par la coopération de la rondelle avec le premier tube, aucun encombrement supplémentaire n'est généré à l'extérieur dudit tube, contrairement au système proposé dans WO 2016/034820.

La rondelle précitée peut être, selon un exemple, du type de celles décrites dans les demandes de brevet publiées EP 1 451 498, WO 2012/013891, ou encore dans la demande de brevet non publiée FR 16 51881. La rondelle peut avoir, en plus de la caractéristique selon l'invention décrite ci-dessus, tout ou partie des caractéristiques décrites dans ces demandes de brevet.

En outre, l'élément de blocage est prévu sensiblement sur une partie de plus petit diamètre de la rondelle, ce qui limite encore davantage son encombrement. Par « sensiblement », on entend que l'élément de blocage se trouve à proximité d'une partie de plus petit diamètre de la rondelle, par exemple à une distance de la partie de plus petit diamètre de la rondelle qui n'excède pas 40% de la longueur axiale de la rondelle, de préférence 30%, de préférence encore 20%, de préférence encore 15%, de préférence encore 10%, de préférence encore 5%.

Optionnellement, l'élément de blocage comprend une patte de blocage configurée pour être reçue dans l'organe de positionnement du premier tube. Ainsi, la coopération de l'élément de blocage et de l'organe de positionnement est une coopération mécanique et géométrique simple, qui ne nécessite pas d'opération de fixation particulière.

En outre, la rondelle est en général réalisée en métal, par emboutissage, découpe et pliage. Dans la fabrication de la rondelle, il est aisé de réaliser sur cette dernière une patte formant patte de blocage. Plus génériquement, la patte de blocage peut être formée d'une seule pièce avec la rondelle.

Optionnellement, la patte de blocage fait saillie radialement vers l'intérieur de la rondelle. L'intérieur s'entend par rapport à l'axe de l'enroulement formé par la rondelle. De manière générale, sauf précision contraire, les adjectifs intérieur et extérieur, ou bien interne et externe, sont utilisés en référence à une direction radiale de sorte que la partie intérieure d'un élément est, suivant une direction radiale, plus proche de l'axe de la rondelle que la partie extérieure du même élément. Le fait que la patte de blocage fasse saillie radialement vers l'intérieur de la rondelle limite davantage l'encombrement.

Optionnellement, la patte de blocage fait saillie à partir d'une partie de sensiblement plus petit diamètre de la rondelle. En particulier, lorsque les extrémités des tubes en regard présentent des surfaces d'appui faisant saillie par rapport à la surface extérieure cylindrique desdits tubes, la rondelle est avantageusement de forme sensiblement tronconique.

Ainsi, la patte de blocage dépasse radialement vers l'intérieur, par rapport au reste de la rondelle. Alternativement ou en complément, la patte de blocage peut dépasser axialement et/ou radialement par rapport au reste de la rondelle.

Par ailleurs, l'élément de blocage, en l'occurrence la patte de blocage, peut être formé sur un bord de la rondelle.

Optionnellement, lorsque le système est monté sur le premier tube, la patte de blocage fait saillie en direction d'un bord de ladite extrémité du premier tube, c'est-à-dire de l'extrémité du premier tube destinée à être aboutée au deuxième tube.

Optionnellement, la patte de blocage est sensiblement plane.

Optionnellement, la rondelle comprend des découpes de part et d'autre de la patte de blocage. De telles découpes sont de préférence longitudinales par rapport à la patte de blocage. Les découpes peuvent se situer à la base de la patte de blocage, c'est-à-dire à son extrémité proximale.

Grâce aux découpes, la patte de blocage est désolidarisée de la rondelle sur une plus grande longueur qu'en l'absence de découpes. Ceci augmente la flexibilité de la patte de blocage et facilite sa coopération avec l'organe de positionnement du premier tube.

Optionnellement, la patte de blocage est courbée en section axiale. Une section axiale est une section selon un plan qui comprend l'axe, en l'occurrence l'axe de la rondelle. Par exemple, la patte de blocage peut être en forme de crochet, en forme convexe ou concave. Une forme courbe limite le fléchissement de la patte de blocage, ce qui bloque l'insertion du système de serrage sur le premier tube si l'élément de blocage et l'organe de positionnement ne coopèrent pas. La patte de blocage peut ainsi agir comme un détrompeur et assurer encore davantage le bon positionnement du système de serrage par rapport au premier tube.

La patte de blocage peut encore prendre d'autres formes.

Dans sa définition générale, l'invention prévoit au moins un élément de blocage et un organe de positionnement. On peut en effet prévoir plusieurs éléments de blocage, par exemple deux ou trois éléments de blocage répartis angulairement de manière régulière ou non, et coopérant avec des organes de positionnement correspondants.

L'invention concerne également un ensemble de raccordement de deux tubes comprenant un système tel que précédemment décrit et un premier tube sur lequel est monté ledit système et qui est apte à être abouté avec un deuxième tube, le premier tube comprenant un organe de positionnement coopérant avec l'élément de blocage du système.

Cet ensemble comprend le système selon l'invention et le premier tube à l'extrémité duquel ce système peut être pré-monté dans un état où le collier de serrage, à l'état non serré, s'étend autour du premier tube.

Optionnellement, le premier tube comprend, de préférence à son extrémité, une saillie radiale prolongée par un prolongement annulaire, typiquement un prolongement axial, de préférence sensiblement cylindrique. L'organe de positionnement peut être formé au moins partiellement dans ledit prolongement.

Optionnellement, l'organe de positionnement s'étend depuis un bord de l'extrémité du premier tube qui est apte à être aboutée avec le deuxième tube. Ainsi, l'élément de blocage peut garantir le bon positionnement angulaire du système de serrage par rapport au premier tube dès l'insertion dudit système sur le premier tube du côté dudit bord.

Optionnellement, le premier tube comprend une saillie radiale et l'organe de positionnement s'étend jusqu'à la saillie radiale. Ainsi, la coopération entre l'organe de positionnement et l'élément de blocage n'empêche pas la rondelle de venir contre la saillie radiale et d'assurer, de ce fait, une bonne étanchéité.

Optionnellement, l'organe de positionnement comprend une encoche, un orifice ou un renfoncement.

Optionnellement, à l'état non serré, le collier de serrage est espacé radialement de la rondelle. Ainsi, un espace annulaire est défini entre la bande du collier et la rondelle, espace dans lequel le deuxième tube peut être inséré pour le raccordement et l'accouplement des tubes.

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 est une vue en perspective, montrant le système pré-monté à l'extrémité du premier tube, avant le serrage du collier ;
- la figure 2 est une vue en coupe dans le plan II de la figure 1, ce plan étant défini par l'axe du tube et par un diamètre de ce tube passant par l'élément de blocage ;
- la figure 3 est une vue en perspective de la rondelle de la figure 1, isolée ;
- la figure 4 est une vue analogue à la figure 1, pour un ensemble de raccordement selon un deuxième mode de réalisation ;
- la figure 5 est une vue analogue à la figure 1, pour un ensemble de raccordement selon un troisième mode de réalisation.

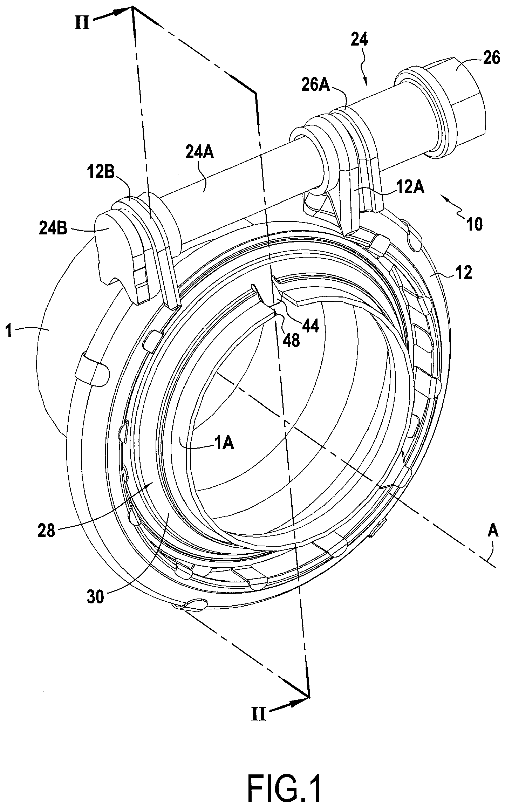

On décrit tout d'abord les figures 1 à 3. On voit sur ces figures que le système de serrage comprend un collier 10, globalement du même type que celui que décrit dans EP 1 451 498 et WO 2012/013891, et une rondelle 28, qui coopèrent pour assembler deux tubes 1 et 2. Il doit toutefois être entendu que l'invention n'est pas limitée à ce type de collier.

Comme indiqué précédemment, on qualifie d'« internes » les éléments qui sont dirigés vers l'axe A des deux tubes mis en bout à bout ou qui sont les plus proches de cet axe A par rapport à d'autres éléments qualifiés d'« externes », les éléments « externes » étant également ceux qui sont dirigés à l'opposé de l'axe A.

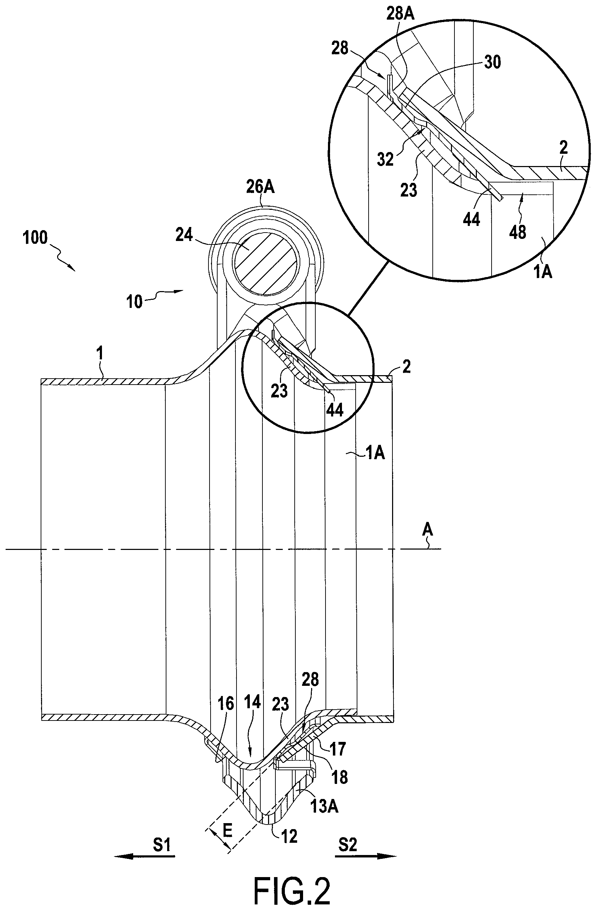

En l'espèce, le collier comporte une bande 12 qui, comme on le voit sur les figures 1 et 2, a une périphérie interne qui délimite un renfoncement 14 dans lequel des surfaces d'appui, respectivement 16 appartenant au premier tube 1, et 18 appartenant au deuxième tube 2 peuvent être insérées. Ce renfoncement et ces surfaces d'appui ont des formes telles que le serrage de la bande du collier contraint les extrémités des tubes à se rapprocher l'une de l'autre. Ainsi, la bande 12 présente en section avantageusement une forme en V, tandis que les surfaces d'appui 16 et 18 ont un diamètre qui augmente graduellement vers les extrémités libres en regard des tubes, et sont par exemple de forme tronconique. La bande 12 présente des extrémités, respectivement 12A et 12B, qui sont redressées sensiblement radialement de manière à former des pattes d'appui. Ces pattes sont percées de manière à permettre le passage de la tige 24A d'une vis 24 à travers ces pattes. La tête 24B de la vis est calée par rapport à l'une des pattes d'appui, en l'espèce la patte 12B, tandis qu'un écrou 26 est retenu par rapport à l'autre patte d'appui 12A. On comprend que la rotation de l'écrou dans le sens du vissage rapproche les pattes d'appui l'une de l'autre et réduit donc le diamètre intérieur du collier, c'est-à-dire qu'elle permet de serrer la bande. En l'espèce, une rondelle de calage 26A est interposée entre la patte d'appui 12A et l'écrou 26, cette rondelle 26A ayant une encoche la calant par rapport à la pointe du V que forme la bande 12 pour l'empêcher de tourner par rapport à elle lors de la rotation de la vis 24.

Le système de serrage comprend également la rondelle 28, qui est solidarisée avec le collier. Cette rondelle présente, selon l'invention, une portion annulaire tronconique 30 qui, comme le voit sur la figure 2, peut s'insérer entre les extrémités en regard des deux tubes lorsqu'ils sont serrés à l'aide du système de serrage. En s'intéressant à la figure 2, on voit que, dans l'état pré-monté du collier 10 à l'extrémité du tube 1, un espace annulaire E est ménagé entre la rondelle 28 pré-montée sur la périphérie extérieure 23 du premier tube 1, et la périphérie interne de la bande 12 du collier. On voit également sur les figures 1 et 2 que dans l'état pré-monté, le collier est sensiblement centré par rapport au tube, l'axe A du collier et de la rondelle étant sur ces figures confondu avec l'axe du premier tube 1. Ainsi, l'espace annulaire E permet l'insertion de l'extrémité d'un deuxième tube 2 sous la bande 12 du collier et l'accouplement des deux tubes.

A cet égard, il convient de relever que l'extrémité du tube 2 est une extrémité femelle, sa périphérie interne présentant un évasé. En revanche, l'extrémité du tube 1 est une extrémité mâle qui, au-delà de la surface d'appui 18, présente une périphérie extérieure 23 dont le diamètre va en diminuant vers l'extrémité libre. La partie d'extrémité ainsi formée peut donc s'insérer, sensiblement avec complémentarité de forme, à l'intérieur de l'évasé 17 formé à l'extrémité libre du tube 2. La portion tronconique 30 de la rondelle est située entre l'évasé 17 et la périphérie extérieure 23 de l'extrémité libre du tube 1. La portion tronconique de la rondelle 30 présente des déformations annulaires 32 formant joint d'étanchéité. L'évasé 17 formé à la périphérie interne de l'extrémité libre du tube 2, et la périphérie externe de la partie d'extrémité 23 du tube 1 forment donc des surfaces d'étanchéité qui, lorsque le système de serrage est serré, prennent entre elles la portion tronconique 30 de la rondelle et pressent le joint d'étanchéité 32, de sorte que l'étanchéité de la liaison entre les tubes est assurée.

La fixation de la rondelle 28 au collier 10, et le pré-montage de l'ensemble constitué par le collier 10 et la rondelle 28 sur le premier tube 1 peuvent être assurés de la même manière que dans EP 1 451 498 et WO 2016/034820, par des pattes de fixation que présente la rondelle 28.

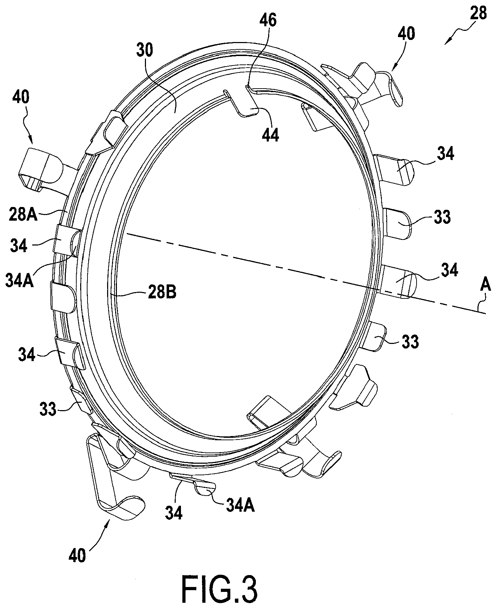

Ainsi, la rondelle 28 présente une série de pattes internes 33 mieux visibles sur la figure 3. Lorsque la rondelle est assemblée au collier, ces pattes internes coopèrent avec la périphérie interne de l'une des ailes de la bande 12, en l'espèce l'aile 13A. Ces pattes internes servent à maintenir la rondelle à distance de la périphérie interne de l'aile 13A. Les pattes de fixation comprennent également des pattes externes 34 qui, comme on le voit en particulier sur les figures 1 et 3, sont suffisamment longues pour parvenir en contact avec le bord interne libre de l'aile 13A. Les pattes internes 33 peuvent être légèrement relevées radialement dans le sens allant vers leurs extrémités libres, de manière à ce que ces extrémités libres viennent plus sûrement en appui contre la périphérie interne de l'aile 13A. En revanche, les pattes externes 34 sont dirigées sensiblement axialement de manière à passer sous le bord interne libre de l'aile 13A. On voit que l'extrémité libre de ces pattes externes 34 est recourbée pour former un crochet 34A qui vient s'accrocher sur la face externe de l'aile 13A.

Eventuellement, les pattes internes 33 et externes 34 peuvent présenter d'autres caractéristiques parmi celles qui sont détaillées dans les demandes de brevet publiées EP 1 451 498, WO 2012/013891, ou encore dans la demande de brevet non publiée FR 16 51881. Le cas échéant, les pattes externes 34 peuvent former ou comprendre des premières pattes de pré-montage qui permettent le pré-montage du système de serrage sur le deuxième tube 2.

Sur les figures 1 à 3, des deuxièmes moyens de pré-montage comprennent des deuxièmes pattes de pré-montage 40 qui sont situées d'un deuxième côté de la rondelle 28, opposé au premier côté, et qui s'étendent en l'espèce dans le sens axial S2 à partir de la périphérie externe 28A de la rondelle. Dans le mode de réalisation représenté, comme on le voit mieux sur la figure 3, ces deuxièmes pattes de pré-montage 40 sont similaires aux deuxièmes pattes de pré-montage divulguées dans WO 2012/013891. Elles peuvent avoir tout ou partie des caractéristiques listées dans ce document et se présenter au moins sous les variantes qui y sont décrites, en particulier mais non exclusivement selon le mode de réalisation de la figure 7C de ce document. Les deuxièmes pattes de pré-montage 40 assurent la solidarisation de la rondelle 28 avec le premier tube 1. D'autres moyens de solidarisation peuvent être employés.

Par ailleurs, comme indiqué précédemment, la rondelle 28 présente un élément de blocage configuré pour coopérer avec un organe de positionnement correspondant du premier tube 1 de façon à bloquer la rondelle 28 en rotation par rapport au premier tube 1. En l'espèce, l'élément de blocage comprend une patte de blocage 44 configurée pour coopérer avec une encoche 48 du premier tube 1.

Dans l'exemple des figures 1 à 3, la patte de blocage 44 fait saillie radialement vers l'intérieur de la rondelle 28 et axialement en direction du bord de l'extrémité libre du premier tube 1, c'est-à-dire l'extrémité destinée à être aboutée à une extrémité du deuxième tube 2. En l'espèce, la patte de blocage 44 se situe dans le prolongement de la portion tronconique 30, ici du côté radialement interne de la rondelle 28. Ainsi, abstraction faite des découpes 46 qui seront décrites par la suite, la patte de blocage 44 fait saillie à partir d'une partie de sensiblement plus petit diamètre de la rondelle 28, en l'occurrence la périphérie interne 28B de la rondelle 28. L'extrémité de la patte de blocage 44 opposée à la rondelle 28, ou extrémité distale, s'étend davantage vers l'intérieur de la rondelle que la partie de plus petit diamètre de la rondelle 28. En outre, ainsi qu'il ressort notamment de la figure 3, la patte de blocage 44 fait saillie d'une extrémité de la rondelle 28, plus précisément d'une extrémité de la portion tronconique 30 de la rondelle, axialement opposée à l'extrémité de laquelle font saillie les pattes de fixations, pattes internes 33, pattes externes 34 et/ou deuxièmes pattes de pré-montage 40.

Comme illustré sur le détail grossi de la figure 2, la patte de blocage 44 traverse radialement l'encoche 48, ce par quoi elle opère un blocage en rotation de la rondelle 28 par rapport au premier tube 1. A cet effet, la patte de blocage 44 peut avoir une largeur angulaire légèrement inférieure à la largeur angulaire de l'encoche 48, par exemple comprise entre 50% et 100% de la largeur angulaire de l'encoche 48.

Dans ce mode de réalisation, la patte de blocage 44 est sensiblement plane, du moins en section axiale. Dans la direction circonférentielle, la patte de blocage 44 peut avoir une courbure correspondant à la courbe circonférentielle de la portion tronconique 30 de la rondelle 28.

Par ailleurs, la flexibilité de la patte de blocage 44 est augmentée au moyen de découpes 46 de la rondelle, de part et d'autre de la patte de blocage 44. Comme on le voit plus particulièrement sur la figure 3, les découpes 46 sont longitudinales et s'étendent le long de la patte de blocage 44. Les découpes 46 ont une composante non nulle dans la direction de l'axe A.

En outre, la partie en saillie 23 du premier tube 1 est prolongée, à l'opposé de la surface d'appui 16, par un prolongement sensiblement annulaire 1A. Le prolongement annulaire 1A a de préférence un diamètre inférieur au diamètre du reste du premier tube 1, de sorte qu'il soit possible, comme illustré sur la figure 2, d'emmancher sur le prolongement 1A le deuxième tube 2 qui a un diamètre sensiblement égal, à l'exception de l'évasé 17, à celui d'une portion principale du premier tube 1. Le prolongement 1A peut également prendre d'autres formes, par exemple une forme sensiblement tronconique ou la réunion de plusieurs prolongements discontinus répartis angulairement, régulièrement ou non.

Dans ce mode de réalisation, le prolongement 1A est un prolongement axial, en l'occurrence sensiblement cylindrique, c'est-à-dire par exemple cylindrique à l'exception de l'encoche 48. L'organe de positionnement que constitue ici l'encoche 48 est formé dans le prolongement 1A.

Plus précisément, dans ce mode de réalisation, l'encoche 48 s'étend depuis le bord de l'extrémité du premier tube 1 qui est apte à être aboutée avec le deuxième tube 2 et jusqu'à la saillie radiale du premier tube 1, formée ici par la périphérie extérieure 23. Ainsi, la patte de blocage 44 et l'encoche 48 peuvent coopérer dès l'engagement du système de serrage et en particulier de la rondelle 28 sur le premier tube 1, et jusqu'à ce que la rondelle 28 vienne en butée contre la périphérie extérieure 23, à la fois dans l'état non serré et dans l'état serré du système de serrage.

Inversement, l'encoche 48 pourrait ne pas être débouchante. En d'autres termes, l'organe de positionnement comprendrait, à la place d'une encoche à proprement parler, un orifice situé à distance du bord de l'extrémité du premier tube 1. Lors de l'emmanchement du système de serrage sur le premier tube, la patte de blocage 44 fléchirait jusqu'à pouvoir entrer dans l'orifice, par une sorte de clipsage. Cette opération est facilitée lorsque la patte de blocage 44 fait saillie en direction d'un bord de l'extrémité du premier tube 1.

Une fois dans l'orifice, la patte de blocage 44 reprendrait sa position initiale. La coopération de la patte de blocage 44 formant élément de blocage et de l'orifice formant organe de positionnement assurerait alors non seulement un blocage radial, mais aussi un blocage axial de la rondelle 28 par rapport au premier tube 1. Ce blocage axial permet de maintenir le système de serrage sur le premier tube 1. Si ce maintien présente un équilibre suffisant, ce qui peut être atteint au besoin en prévoyant plusieurs pattes de blocage 44 comme expliqué précédemment, il est possible de simplifier, voire de supprimer les deuxièmes pattes de pré-montage 40 qui ont notamment pour rôle d'assurer le blocage axial de la rondelle 28 par rapport au premier tube 1.

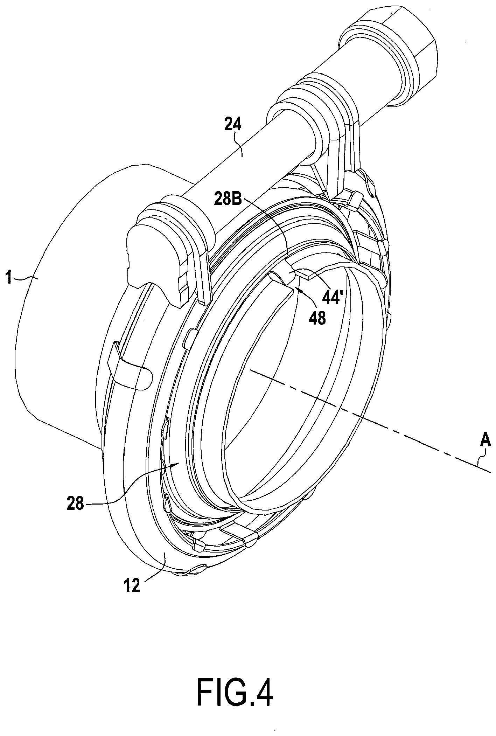

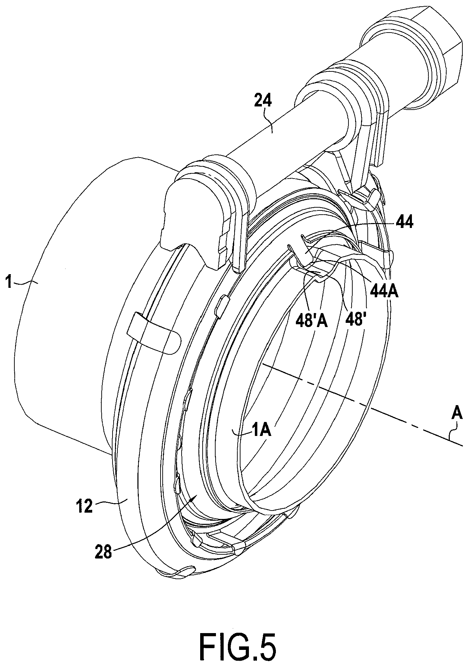

Les figures 4 et 5 présentent l'ensemble de raccordement dans d'autres modes de réalisation. Sur ces figures, les éléments correspondant ou identiques à ceux du premier mode de réalisation recevront le même signe de référence et ne seront pas décrits à nouveau.

Un deuxième mode de réalisation, représenté sur la figure 4, est identique au premier mode de réalisation de la figure 1 hormis en ce qui concerne la forme de l'élément de blocage. En effet, dans ce mode de réalisation, l'élément de blocage comprend une patte de blocage 44' qui est courbée en section axiale. Typiquement, la patte de blocage 44' peut prendre la forme d'un crochet configuré pour crocheter l'encoche 48. En outre, dans ce mode de réalisation, la rondelle 28 ne comprend pas de découpes 46.

Un troisième mode de réalisation, représenté sur la figure 5, est identique au premier mode de réalisation de la figure 1 hormis en ce qui concerne la forme de l'organe de positionnement. En effet, dans ce mode de réalisation, l'organe de positionnement du premier tube 1 comprend un renfoncement 48'. Comme l'encoche 48, le renfoncement 48' est formé dans le prolongement 1A et s'étend depuis le bord de l'extrémité du premier tube 1 et jusqu'à la saillie radiale du premier tube 1, formée ici par la périphérie extérieure 23. Le renfoncement 48' fait saillie dans la direction radiale, vers l'intérieur du premier tube 1. De plus, pour éviter toute usure du premier tube 1 ou de l'élément de blocage, la distance à l'axe A de la paroi de fond 48'A du renfoncement 48' est inférieure à la distance à l'axe A de l'extrémité distale 44A de la patte de blocage. Le renfoncement 48' peut être obtenu par emboutissage.

Pour l'ensemble des modes de réalisation présentés, une fois que le système de serrage est placé en attente, c'est-à-dire en situation de pré-montage, à l'extrémité du premier tube 1, il peut être manipulé comme un tout avec ce premier tube. Pour assembler le premier tube 1 avec le deuxième tube 2, on amène ce dernier vers l'extrémité du premier tube en insérant son extrémité dans l'espace annulaire E précité, puis on serre le collier de manière classique. En l'espèce, les moyens de serrage du collier comprennent la vis précitée qui, lorsque l'écrou est vissé sur la tige filetée de cette vis, réduit l'espace entre les pattes d'appui 12A et 12B. D'autres moyens de serrage pourraient bien entendu être envisagés, en particulier un accrochage ou un pincement.

En outre, il va de soi que l'élément de blocage comprenant une patte de blocage courbe 44' selon le deuxième mode de réalisation est compatible avec le renfoncement 48' selon le troisième mode de réalisation. D'autres formes peuvent également être envisagées aussi bien pour l'élément de blocage que pour l'organe de positionnement, par exemple d'autres types d'excroissances que les pattes 44, 44'. L'élément de blocage peut également être configuré pour recevoir une excroissance formant organe de positionnement du premier tube, à l'inverse de la configuration décrite dans les exemples précédents.

Plus généralement, bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels comme définis par les revendications. Par conséquent, la description et les dessins doivent être considérés dans un sens illustratif plutôt que restrictif.

## Revendications

1. Système pour le raccordement d'un premier tube (1) et d'un deuxième tube (2), le système comprenant un collier de serrage (10) apte à être serré autour des extrémités aboutées des deux tubes (1, 2), et une rondelle (28) solidarisée avec le collier de serrage par des moyens de solidarisation (33, 34, 40), la rondelle (28) présentant une portion annulaire tronconique (30) qui peut s'insérer entre les extrémités en regard des deux tubes (1, 2) lorsqu'ils sont serrés à l'aide dudit système,
dans lequel la rondelle (28) présente un élément de blocage (44, 44') configuré pour coopérer avec un organe de positionnement (48, 48') correspondant du premier tube (1) de façon à bloquer la rondelle (28) en rotation par rapport au premier tube (1) et de façon à assurer une position angulaire prédéterminée entre le système de serrage et le premier tube (1) par le choix de l'emplacement de l'élément de blocage sur la rondelle (28) et de l'organe de positionnement sur le premier tube (1), respectivement, l'élément de blocage (44, 44') étant prévu sensiblement sur une partie de plus petit diamètre de la rondelle (28).

2. Système selon la revendication 1, dans lequel l'élément de blocage comprend une patte de blocage (44, 44') configurée pour être reçue dans l'organe de positionnement (48, 48') du premier tube (1).

3. Système selon la revendication 2, dans lequel la patte de blocage (44, 44') fait saillie radialement vers l'intérieur de la rondelle (28).

4. Système selon la revendication 2 ou 3, dans lequel la patte de blocage (44, 44') fait saillie à partir d'une partie de sensiblement plus petit diamètre (28B) de la rondelle (28).

5. Système selon l'une quelconque des revendications 2 à 4, dans lequel lorsque le système est monté sur le premier tube (1), la patte de blocage (44, 44') fait saillie en direction d'un bord de ladite extrémité du premier tube (1).

6. Système selon l'une quelconque des revendications 2 à 5, dans lequel la patte de blocage (44) est sensiblement plane.

7. Système selon l'une quelconque des revendications 2 à 6, dans lequel la rondelle (28) comprend des découpes (46) de part et d'autre de la patte de blocage (44).

8. Système selon l'une quelconque des revendications 2 à 5, dans lequel la patte de blocage (44') est courbée en section axiale.

9. Ensemble de raccordement de deux tubes comprenant un système selon l'une quelconque des revendications 1 à 8 et un premier tube (1) sur lequel est monté ledit système et qui est apte à être abouté avec un deuxième tube (2), le premier tube (1) comprenant un organe de positionnement (48, 48') coopérant avec l'élément de blocage (44, 44') du système.

10. Ensemble selon la revendication 9, dans lequel l'organe de positionnement (48, 48') s'étend depuis un bord de l'extrémité du premier tube (1) qui est apte à être aboutée avec le deuxième tube (2).

11. Ensemble selon la revendication 9 ou 10, dans lequel le premier tube (1) comprend une saillie radiale (23) et l'organe de positionnement (48, 48') s'étend jusqu'à la saillie radiale (23).

12. Ensemble selon l'une quelconque des revendications 9 à 11, dans lequel l'organe de positionnement comprend une encoche (48), un orifice ou un renfoncement (48').

## Patentansprüche

1. System zum Verbinden eines ersten Rohrs (1) und eines zweiten Rohrs (2), wobei das System eine Klemmschelle (10), die geeignet ist, um die aneinandergefügten Enden der beiden Rohre (1, 2) herum festgezogen zu werden, sowie eine Unterlegscheibe (28) umfasst, die durch Mittel zum festen Verbinden (33, 34, 40) mit der Klemmschelle fest verbunden ist, wobei die Unterlegscheibe (28) einen kegelstumpfförmigen Ringabschnitt (30) aufweist, der sich zwischen den gegenüberliegenden Enden der beiden Rohre (1, 2) einfügen kann, wenn sie mit Hilfe des Systems festgeklemmt werden,
wobei die Unterlegscheibe (28) ein Blockierelement (44, 44') aufweist, das dazu ausgelegt ist, mit einem entsprechenden Positionierungsorgan (48, 48') des ersten Rohrs (1) zusammenzuwirken, um die Unterlegscheibe (28) gegen ein Drehen gegenüber dem ersten Rohr (1) festzulegen, und um eine vorbestimmte Winkelposition zwischen dem Klemmsystem und dem ersten Rohr (1) durch die Wahl der Stelle des Blockierelements an der Unterlegscheibe (28) bzw. des Positionierungsorgans an dem ersten Rohr (1) sicherzustellen, wobei das Blockierelement (44, 44') im Wesentlichen an einem Teil mit kleinerem Durchmesser der Unterlegscheibe (28) vorgesehen ist.

2. System nach Anspruch 1, bei dem das Blockierelement eine Blockierlasche (44, 44') umfasst, die dazu ausgelegt ist, in dem Positionierungsorgan (48, 48') des ersten Rohrs (1) aufgenommen zu werden.

3. System nach Anspruch 2, bei dem die Blockierlasche (44, 44') zur Innenseite der Unterlegscheibe (28) radial vorspringt.

4. System nach Anspruch 2 oder 3, bei dem die Blockierlasche (44, 44') von einem Teil mit deutlich kleinerem Durchmesser (28B) der Unterlegscheibe (28) vorspringt.

5. System nach einem der Ansprüche 2 bis 4, bei dem, wenn das System an dem ersten Rohr (1) angebracht ist, die Blockierlasche (44, 44') in Richtung eines Randes des Endes des ersten Rohrs (1) vorspringt.

6. System nach einem der Ansprüche 2 bis 5, bei dem die Blockierlasche (44) im Wesentlichen eben ist.

7. System nach einem der Ansprüche 2 bis 6, bei dem die Unterlegscheibe (28) Ausschnitte (46) auf beiden Seiten der Blockierlasche (44) aufweist.

8. System nach einem der Ansprüche 2 bis 5, bei dem die Blockierlasche (44') im axialen Querschnitt gekrümmt ist.

9. Anordnung zur Verbindung von zwei Rohren, umfassend ein System nach einem der Ansprüche 1 bis 8 und ein erstes Rohr (1), an dem das System angebracht ist und das geeignet ist, mit einem zweiten Rohr (2) zusammengefügt zu werden, wobei das erste Rohr (1) ein Positionierungsorgan (48, 48') umfasst, das mit dem Blockierelement (44, 44') des Systems zusammenwirkt.

10. Anordnung nach Anspruch 9, bei der sich das Positionierungsorgan (48, 48') von einem Rand des Endes des ersten Rohrs (1) erstreckt, welches geeignet ist, mit dem zweiten Rohr (2) zusammengefügt zu werden.

11. Anordnung nach Anspruch 9 oder 10, bei der das erste Rohr (1) einen radialen Vorsprung (23) umfasst und sich das Positionierungsorgan (48, 48') bis zu dem radialen Vorsprung (23) erstreckt.

12. Anordnung nach einem der Ansprüche 9 bis 11, bei der das Positionierungsorgan eine Kerbe (48), eine Öffnung oder eine Vertiefung (48') aufweist.

## Claims

1. A system for connecting a first tube (1) and a second tube (1), the system comprising a clamping collar (10) suitable for being tightened around the abutted ends of the two tubes (1, 2), and a washer (28) secured to the clamping collar by securing means (33, 34, 40), the washer (28) presenting a frustoconical annular portion (30) that is suitable for inserting between the facing ends of the two tubes (1, 2) when they are clamped together using said system,
wherein the washer (28) presents a blocking element (44, 44') configured to co-operate with a corresponding positioning member (48, 48') of the first tube (1) so as to block the washer (28) against turning relative to the first tube (1) and so as to ensure a predetermined angular position between the clamping system and the first tube (1) by selecting the locations for the blocking element on the washer (28) and for the positioning element on the first tube (1), respectively, the blocking element (44, 44') being provided substantially on a smallest diameter portion of the washer (28).

2. A system according to claim 1, wherein the blocking element comprises a blocking tab (44, 44') configured to be received in the positioning member (48, 48') of the first tube (1).

3. A system according to claim 2, wherein the blocking tab (44, 44') projects radially towards the inside of the washer (28).

4. A system according to claim 2 or claim 3, wherein the blocking tab (44, 44') projects from a substantially smallest diameter portion (28B) of the washer (28).

5. A system according to any one of claims 2 to 4 wherein, when the system is assembled on the first tube (1), the blocking tab (44, 44') projects towards an edge of said end of the first tube (1).

6. A system according to any one of claims 2 to 5, wherein the blocking tab (44) is substantially plane.

7. A system according to any one of claims 2 to 6, wherein the washer (28) includes cutouts (46) on either side of the blocking tab (44).

8. A system according to any one of claims 2 to 5, wherein the blocking tab (44') is curved in axial section.

9. An assembly for connecting together two tubes, the assembly comprising a system according to any one of claims 1 to 8 and a first tube (1) on which said system is assembled and which is suitable for being abutted with a second tube (2), the first tube (1) having a positioning member (48, 48') co-operating with the blocking element (44, 44') of the system.

10. An assembly according to claim 9, wherein the positioning member (48, 48') extends from an edge of the end of the first tube (1) that is suitable for being abutted with the second tube (2).

11. A system according to claim 9 or claim 10, wherein the first tube (1) has a radial projection (23), and the positioning member (48, 48') extends as far as the radial projection (23).

12. An assembly according to any one of claims 9 to 11, wherein the positioning member comprises a notch (48), an orifice, or a setback (48').
